# EUROPEAN PATENT SPECIFICATION

(11) **EP 2 478 284 B1**
(45) Date of publication and mention of the grant of the patent: **02.10.2013**
(21) Application number: 10742611.6
(22) Date of filing: 10.08.2010
(51) Int. Cl.: F16L 41/02, F16L 59/153

(54) **CONDUIT ASSEMBLY**
LEITUNGSANORDNUNG
ENSEMBLE CONDUIT

(30) Priority: 15.09.2009 NL 2003496
(43) Date of publication of application: 25.07.2012
(73) Proprietor: Thermaflex International Holding B.V., 5145 NS Waalwijk (NL)
(72) Inventor: BAARS, Gerrit-Jan, B-2328 Hoogstraten (BE); GOVERS, Robertus Jan Maria, NL-5152 VS Drunen (NL); VAN BEEK, Jelmar, NL-5025 RD Tilburg (NL)
(74) Representative: Geurts, Franciscus Antonius
(86) International application number: PCT/NL2010/050504
(87) International publication number: WO 2011/034417

(56) References cited:
- EP-A1- 0 277 058
- EP-A1- 1 132 528
- WO-A1-99/61712
- DE-A1- 3 225 517
- DE-U1- 20 204 399
- DE-U1-202007 004 606

## Description

### BACKGROUND OF THE INVENTION

The invention relates to a conduit assembly for connection to connection points, situated on scattered locations, of several buildings or parts of a building, as shown e.g. in document WO 99/61712.

Such conduit assemblies are for instance used in city heating systems, wherein a subterranean main conduit is interrupted at each residence to be serviced, by a coupling assembly within which a coupling is realised between the main conduit and a branch conduit. The coupling is enveloped by a watertight branch housing, provided with insulating material. The conduits are provided with a synthetic medium pipe a flexible insulating sheath around the medium pipes and a watertight, corrugated outer layer of a slightly shape-retaining synthetic material.

Realising the coupling between the branch conduit and the main conduit, making it watertight and insulating it in a dirty and often narrow trench, pit or crawl space are laborious actions that need to be repeated for each residence. The trouble for anyone involved therefore is lengthy and the quality of the realised coupling is rather poor due to the dirty and cramped working environment.

It is an object of the invention to provide a conduit assembly that is easy to place.

It is an object of the invention to provide a reliable coupling between the main conduit and the branch conduit.

### SUMMARY OF THE INVENTION

According to a first aspect the invention provides a conduit assembly for connection to connection points that are situated on scattered locations, of several buildings or parts of a building for transport of a liquid medium from or to said connection points, comprising a bendable main conduit, several branch housings scattered over the length of the main conduit and bendable branch conduits extending from the branch housings, wherein the main conduit and the branch conduits are provided with a medium pipe, a flexible heat-insulating sheath around the medium pipe and a sealing outer layer around the heat-insulating sheath, wherein the medium pipes of the branch conduits within the branch housings connect to the medium pipe of the main conduit and the sealing outer layers are connected to or united with the branch housing, wherein the main conduit with the branch conduits alongside it is bent within the bendable range in several windings to form a roll. In that way it is possible to transport a considerable length of the conduit assembly provided with several branch conduits in a compact way.

In one embodiment, at the location of the connection to the branch housing, the branch conduit extends substantially parallel to the main conduit. As a result the branch housing is bent along in a parallel path with respect to the main conduit.

In an efficient embodiment the number of branch conduits is at least three.

In an advantageous embodiment the distances between the branch conduits are the same.

In one custom-made embodiment the distances between the branch conduits substantially correspond with the distances between the connection points.

In one embodiment the outer diameter of the branch conduit is smaller than the outer diameter of the main conduit. As a result the branch conduit has other characteristics than the main conduit.

In one embodiment the outer ends of the branch conduits following the centre line of the main conduit are all oriented towards the same outer end of the main conduit. As a result the conduit assembly can be rolled up in a compact way.

In one embodiment the conduits and/or the outer layer and/or the branch housing are made of synthetic material, preferably thermoplastic synthetic material.

In one embodiment the sheath is made of foam, preferably polyolefin foam or polyurethane foam.

In one embodiment the outer layer comprises transverse corrugations for reinforcement against transverse forces that are exerted on the conduit assembly when it is placed under a layer of soil.

According to a second aspect the invention furthermore provides a method for arranging a conduit assembly, supplied as a roll, for connecting conduits to connection points that are situated on scattered locations, of several buildings or parts of a building for transport of a liquid medium from or to said connection points, wherein the conduit assembly comprises a bendable main conduit, several branch housings scattered over the length of the main conduit and bendable branch conduits extending from the branch housings, wherein the main conduit and the branch conduits are provided with a medium pipe, a flexible heat-insulating sheath around the medium pipe and a sealing outer layer around the heat-insulating sheath, wherein the medium pipes of the branch conduits within the branch housings connect to the medium pipe of the main conduit and the sealing outer layers are connected to or united with the branch housing, wherein the main conduit with the branch conduits alongside it is bent within the bendable range in several windings to form a roll, wherein the method comprises providing the conduit assembly on a roll to an installation location, winding off a length of the conduit assembly, arranging the conduit assembly with the main conduit in a recess or space intended for that purpose, positioning the conduit assembly with respect to the connection points so that the branch conduits are ready in the vicinity of their respective connection points, bending one or more branch conduits in the direction of the connection points. By using this method the conduit assembly can easily be arranged. The connections between the branch conduits and the main conduits are reliable because they have been arranged in a clean environment prior to being transported to the installation location.

According to a third aspect the invention furthermore provides a method for arranging a conduit assembly for connecting a conduit to a connection point of a building for transport of a liquid medium from or to the connection point, wherein the conduit assembly comprises a bendable main conduit, a branch housing and a bendable branch conduit extending from the branch housing, wherein the main conduit and the branch conduit are provided with a medium pipe, a flexible heat-insulating sheath around the medium pipe and a sealing outer layer around the heat-insulating sheath, wherein the medium pipe of the branch conduit within the branch housing connects to the medium pipe of the main conduit and the sealing outer layers are connected to or united with the branch housing, wherein the method comprises, providing a number of conduit assemblies to an installation location, arranging the first conduit assembly with the main conduit in a recess or space intended for that purpose, positioning the first conduit assembly with respect to the respective connection point, so that the branch conduit is ready in the vicinity of the respective connection point, bending the branch conduit in the direction of the connection point, arranging, positioning and bending one or more of the other conduit assemblies in the same manner in the extension of the main conduit of the first conduit assembly, wherein the conduit assemblies are coupled one to the other by means of straight couplings. The conduit assemblies can easily be arranged by using this method. The connections between the branch conduits and the main conduits are reliable because they have been arranged in a clean environment, prior to being transported to the installation location.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached schematic drawings, in which:
Figure 1 shows a view of a conduit assembly according to the invention.
Figures 2A and 2B show views of a section of the conduit assembly according to figure 1.
Figures 3A-C show views and a cross-section of details of the conduit assembly according to figure 1.
Figure 4 shows a view of the conduit assembly according to the invention on a roll.
Figures 5A-C show a schematic depiction of the operation of the conduit assembly according to figure 4.
Figure 6 shows a view of an alternative conduit assembly according to the invention.
Figures 7A-C show schematic depictions of the operation of the alternative conduit assembly according to figure 6.

### DETAILED DESCRIPTION OF THE DRAWINGS

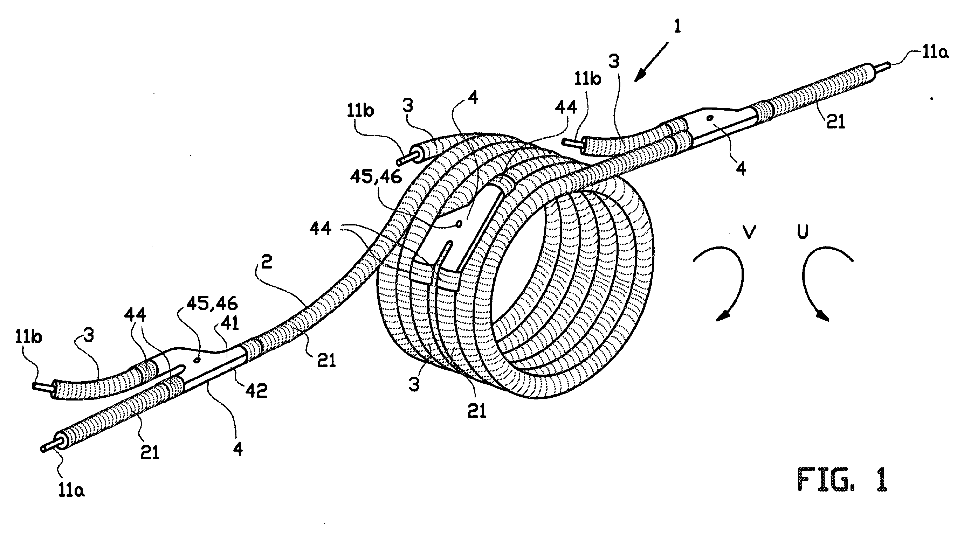

Figure 1 shows a conduit assembly 1 according to a first embodiment of the invention. The conduit assembly 1 comprises a bendable main conduit 2, several shape-retaining branch housings 4 scattered over the length of the main conduit 2 which housings divide the main conduit 2 into consecutive main conduit sections 21, and bendable branch conduits 3 extending from the branch housings 4. The main conduit 2 with the branch conduits 3 parallel alongside it is bent within the bendable range in several windings in winding direction V in order to form a roll. The outer ends of the branch conduits 3 following the centre line of the main conduit 2 are all oriented towards the same outer end of the main conduit 2.

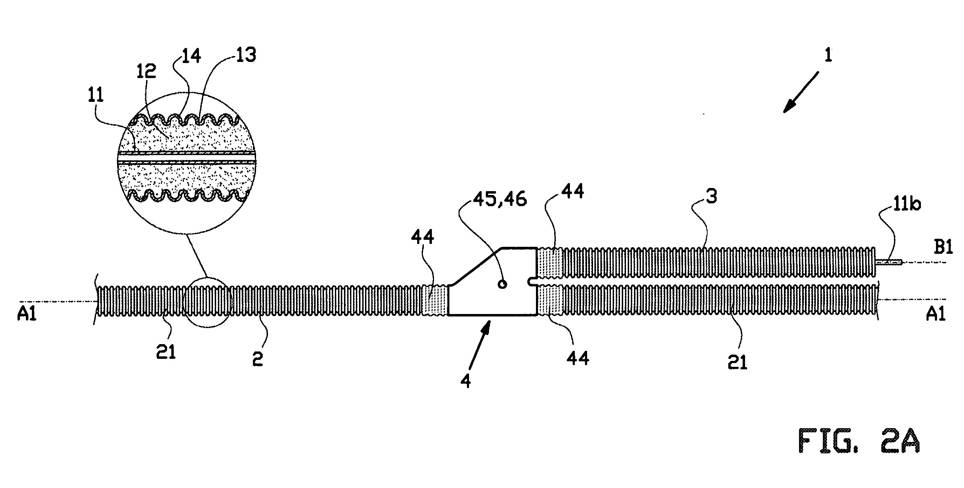

Figure 2A shows a part of the conduit assembly 1 prior to winding or in the unwound condition. Namely one branch housing 4 made of synthetic material, two main conduit sections 21 connecting thereto on either side of the branch housing 4 and one branch conduit 3. At the location of the branch housing 4, the centre lines A1 of the main conduit sections 21 are in each other's extension, the centre line B1 is adjacent thereto and parallel to the centre lines A1.

The detail of figure 2A shows a longitudinal section of the main conduit section 21, which is representative of the longitudinal sections of both the main conduit 2 and the branch conduits 3. The main conduit 2 and the branch conduits 3 are built up with a main medium pipe 11a and a branch medium pipe 11b, respectively, a flexible heat-insulating sheath 12 around the medium pipe 11a-b and a sealing outer layer 13 around the heat-insulating sheath 12. At the outer ends of the conduits 2, 3 the medium pipe 11a-b extends free from the sheath 12 and the outer layer 13. The sheath 12 is made of a foam, for instance polyolefin foam or polyurethane foam. The medium pipe 11a-b is made of synthetic material, for instance a thermoplastic synthetic material. The outer layer 13 is made of a synthetic material, for instance a thermoplastic synthetic material, and comprises circumferential transverse corrugations 14 in order to augment the rigidity of the outer layer 13.

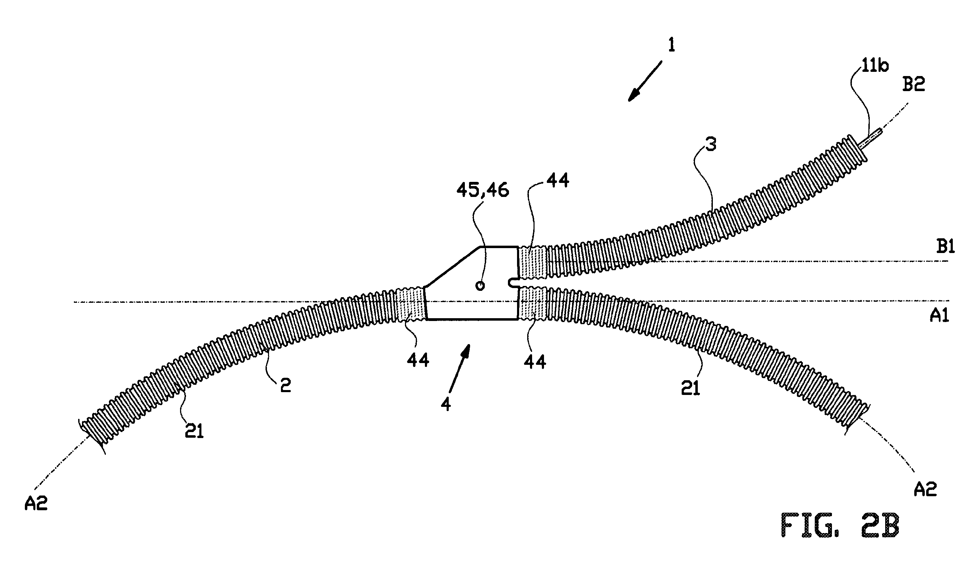

Figure 2B shows the situation after the main conduit sections 21 and the branch conduit 3 have been bent within the bendable range, wherein A2 and B2 indicate the bent centre lines of the main conduit sections 21 and the centre line of the branch conduit 3, respectively. The branch conduit 3 and the main conduit sections 21 are free to bend in any direction within their bendable range. The situation as shown in figure 2B is only an example of the possible bending directions.

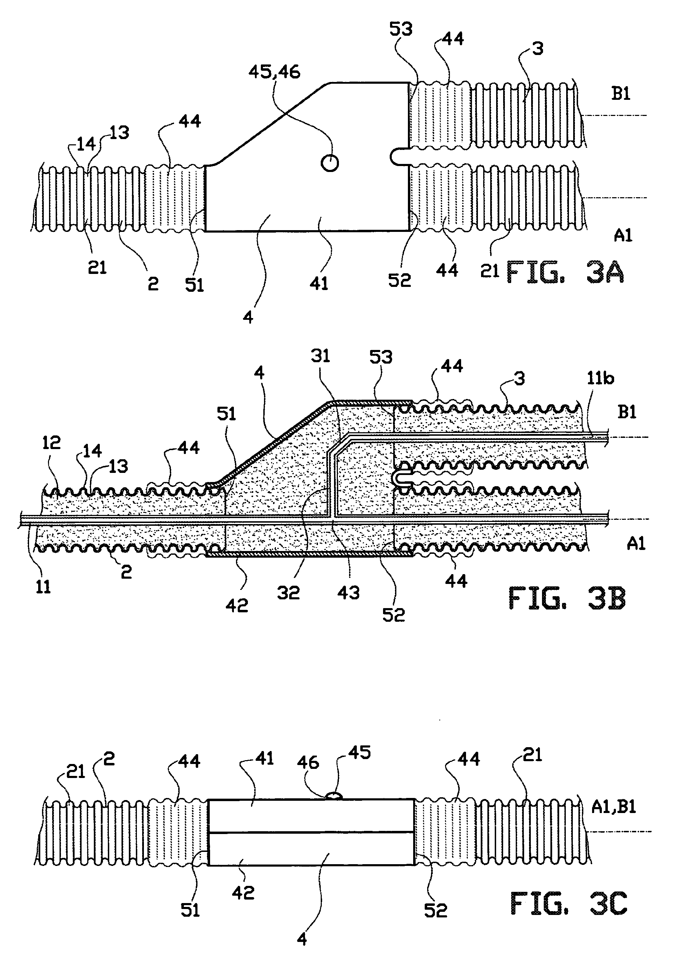

As shown in figure 3C the branch housing 4 comprises a first shell member 41 and a second shell member 42 that connect to each other. As shown in figures 3A-C the branch housing 4 bounds the conduit passage openings 51, 52 and 53 for accommodation of the outer ends of the two main conduit sections 21 extending in each other's extension and the branch conduit 3, respectively, wherein the conduit passage openings 52 and 53 are placed next to each other so that the centre lines A1, B1 of the conduits 2, 3 extend parallel to each other from the branch housing 4. The branch medium pipe 11b is bent within the branch housing 4 via a curvature or an inclined part 31 in order to connect transverse to the main medium pipe 11a. Said transverse connection can for instance be effected by a welded joint 43. At the location of the conduit passage openings 51, 52, 53 the branch housing 4 is provided with shrink sleeves 44 for in combination with the outer layers 13 of the conduits 2, 3 optimally sealing off the conduit passage openings 51, 52, 53.

The first shell member 41 is provided with a filling hole 46 closed off by means of a filling cap 45, through which filling hole 46 insulating foam 47 has been arranged in the branch housing 4. The foam 47 has the same material composition as the insulating sheath 12.

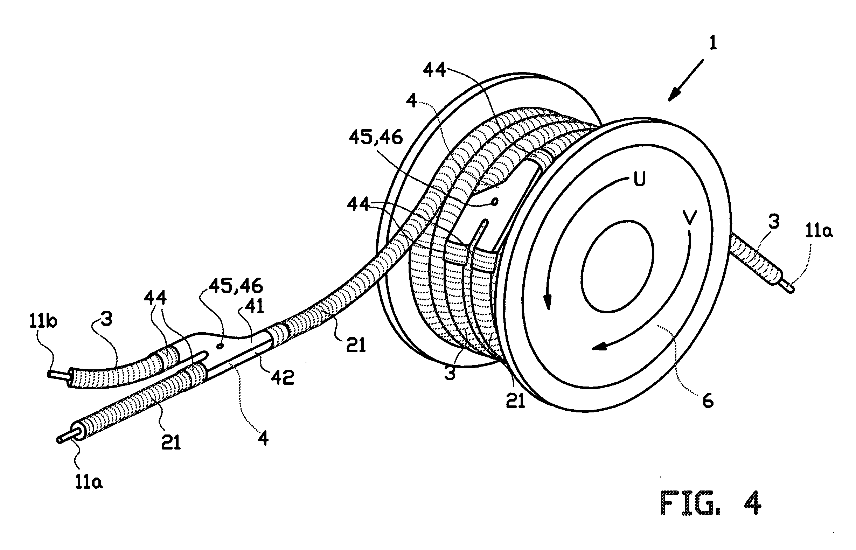

Figure 4 shows the conduit assembly 1 according to the invention, wherein the main conduit 2 with the branch conduits 3 alongside it within the bendable range has been bent in several windings in the winding direction V around a roller 6, for instance a reel, to form a roll.

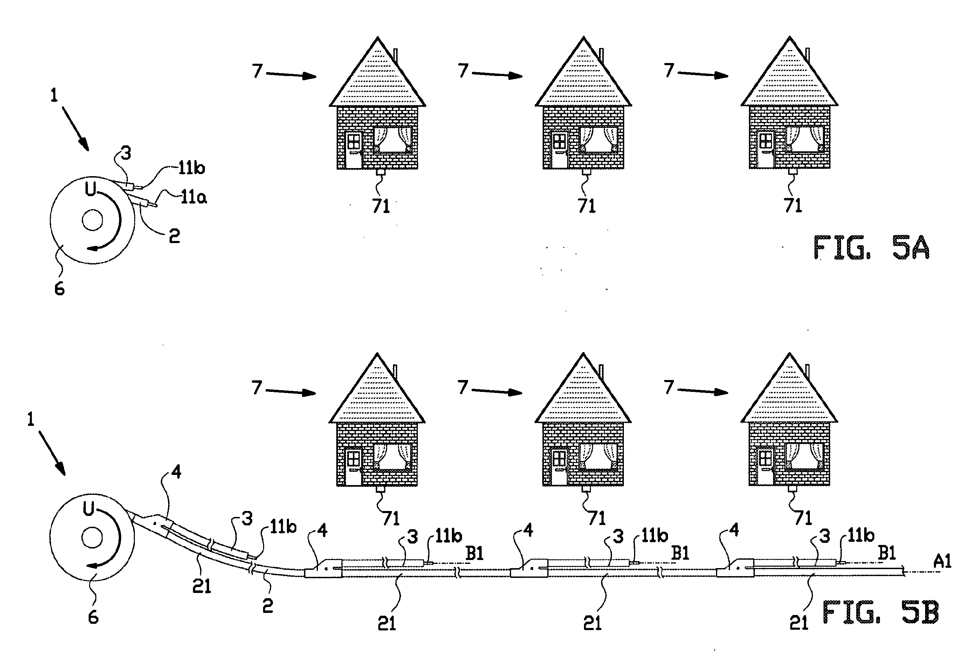

Figures 5A-C show a process of installing the conduit assembly 1 according to figure 4. Said process can be used in a similar way in the conduit assembly 1 without the roller 6 according to figure 1.

Figure 5A shows the situation wherein the conduit assembly 1 on the roller 6 has been supplied to an installation location where three equi-distanced residences 7 are positioned. Each house 7 is provided with a connection point 71 for connecting the branch medium pipe 11b of one of the branch conduits 3, for instance for the supply of hot water. The length of the main conduit sections 21 is chosen such that the intermediate distance of the consecutive branch conduits 3 and the intermediate distance of the consecutive connection points 71 is substantially the same.

Figure 5B shows the situation after the conduit assembly 1 according to an unwinding direction U has been unwound several windings, wherein an unwound length of the main conduit 2 can be arranged in a recess or space (not shown) intended for that purpose, for instance a ditch or the crawl space under the houses 7. The branch conduits 3 are alongside the main conduit 2 with their centre line B1 substantially parallel to the centre line A1 of the main conduit 2. The main conduit 2 is positioned with respect to the connection points 71, so that the branch conduits 3 are ready in the vicinity of their respective connection points 71.

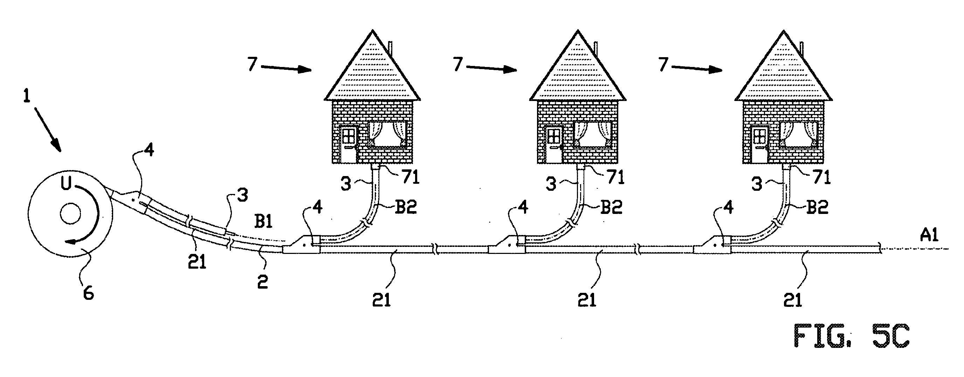

Figure 5C shows the situation after the branch conduits 3 have been bent in the direction of their respective connection points 71. The branch medium pipes 11b are subsequently connected to the connection points 71.

Although the intermediate distance of the houses 7 as shown in figures 5A-C is the same, alternative situations are possible in which the intermediate distance is not the same. The lengths of the main conduit sections 21 can be adapted thereto, so that a customised solution is provided.

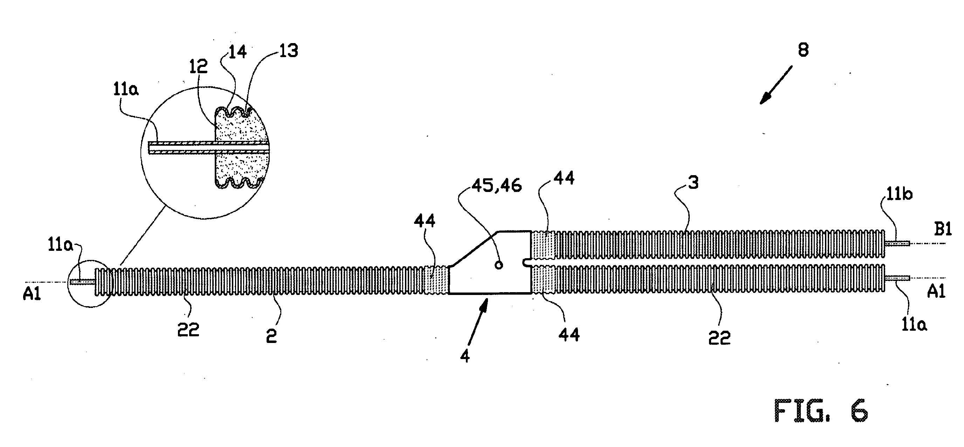

Figure 6 shows an alternative conduit assembly 8, comprising one branch housing 4, two alternative main conduit sections 22 connected thereto on either side of the branch housing 4 and one branch conduit 3, wherein the main medium pipes 11a at the outer ends of the main conduit sections 22 extend free from the sheath 12 and the outer layer 13.

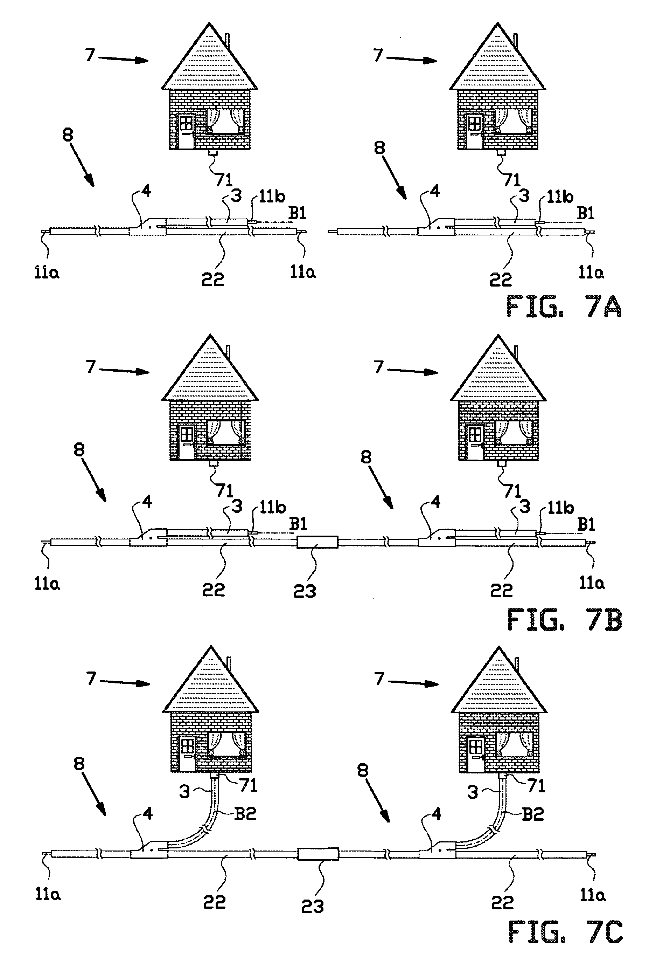

Figures 7A-C show a process of installing two alternative conduit assemblies 8 according to figure 6.

Figure 7A shows the situation wherein two conduit assemblies 8 have been arranged in a recess or space intended for that purpose at an installation location where two equi-distanced residences 7 are positioned. The length of the alternative main conduit sections 22 is chosen such that the intermediate distance of the consecutive branch conduits 3 and the intermediate distance of the consecutive connection points 71 is substantially the same. The branch conduits 3 are alongside the alternative main conduit sections 22 with their centre line B1 parallel to the centre line A1 of the alternative main conduit sections 22. The conduit assemblies 8 are positioned with respect to the connection points 71, so that the branch conduits 3 are ready in the vicinity of their respective connection points 71.

Figure 7B shows the situation after the conduit assemblies 8 are connected to one another with a straight coupling member 23.

Figure 7C shows the situation after the branch conduits 3 have been bent in the direction of their respective connection points 71. The branch medium pipes 11b are subsequently connected to the connection points 71.

## Claims

1. Conduit assembly (1) for connection to connection points that are situated on scattered locations, of several buildings or parts of a building for transport of a liquid medium from or to said connection points, comprising a bendable main conduit (2), several branch housings (4) scattered over the length of the main conduit and bendable branch conduits (3) extending from the branch housings, wherein the main conduit and the branch conduits are provided with a medium pipe (11a, 11b), a flexible heat-insulating sheath (12) around the medium pipe and a sealing outer layer (13) around the heat-insulating sheath (12), wherein the medium pipes (11b) of the branch conduits within the branch housings connect to the medium pipe of the main conduit and the sealing outer layers (13) are connected to or united with the branch housing (4), wherein the main conduit with the branch conduits alongside it is bent within the bendable range in several windings to form a roll.

2. Conduit assembly according to claim 1, wherein at the location of the connection to the branch housing (4) the branch conduit (3) extends substantially parallel to the main conduit (2).

3. Conduit assembly according to any one of the preceding claims, wherein the number of branch conduits (3) is at least three.

4. Conduit assembly according to any one of the preceding claims, wherein the distances between the branch conduits (3) are the same.

5. Conduit assembly according to any one of the preceding claims, wherein the distances between the branch conduits (3) substantially correspond with the distances between the connection points.

6. Conduit assembly according to any one of the preceding claims, wherein the outer diameter of the branch conduit (3) is smaller than the outer diameter of the main conduit (2).

7. Conduit assembly according to any one of the preceding claims, wherein the outer ends of the branch conduits (3) following the centre line of the main conduit are all oriented towards the same outer end of the main conduit.

8. Conduit assembly according to any one of the preceding claims, wherein the conduits (2,3) and/or the outer layer (13) and/or the branch housing (4) are made of synthetic material, preferably thermoplastic synthetic material.

9. Conduit assembly according to any one of the preceding claims, wherein the sheath (12) is made of foam, preferably polyolefin foam or polyurethane foam.

10. Conduit assembly according to any one of the preceding claims, wherein the outer layer (13) comprises transverse corrugations.

11. Method for arranging a conduit assembly (1), supplied as a roll, for connecting conduits (2,3) to connection points (71) that are situated on scattered locations, of several buildings or parts of a building for transport of a liquid medium from or to said connection points, wherein the conduit assembly comprises a bendable main conduit (2), several branch housings (4) scattered over the length of the main conduit and bendable branch conduits (3) extending from the branch housings, wherein the main conduit and the branch conduits are provided with a medium pipe (11a, 11b), a flexible heat-insulating sheath (12) around the medium pipe and a sealing outer layer (13) around the heat-insulating sheath (12), wherein the medium pipes (11b) of the branch conduits within the branch housings (4) connect to the medium pipe of the main conduit and the sealing outer layers are connected to or united with the branch housing (4), wherein the main conduit with the branch conduits alongside it is bent within the bendable range in several windings to form a roll, wherein the method comprises providing the conduit assembly on a roll to an installation location, winding off a length of the conduit assembly (1), arranging the conduit assembly with the main conduit in a recesss or space intended for that purpose, positioning the conduit assembly with respect to the connection points (71) so that the branch conduits are ready in the vicinity of their respective connection points, bending one or more branch conduits (3) in the direction of the connection points.

12. Method for arranging a conduit assembly (1), supplied as a roll, for connecting a conduit to a connection point (71) of a building for transport of a liquid medium from or to the connection point (71), wherein the conduit assembly (1) comprises a bendable main conduit (2), a branch housing (4) and a bendable branch conduit (3) extending from the branch housing (4), wherein the main conduit (2) and the branch conduit (3) are provided with a medium pipe (11a, 11b), a flexible heat-insulating sheath (12) around the medium pipe and a sealing outer layer (13) around the heat-insulating sheath, wherein the medium pipe (11b) of the branch conduit within the branch housing connects to the medium pipe (11a) of the main conduit and the sealing outer layers (13) are connected to or united with the branch housing (4), wherein the method comprises, providing a number of conduit assemblies to an installation location, arranging the first conduit assembly with the main conduit in a recess or space intended for that purpose, positioning the first conduit assembly with respect to the respective connection point (71), so that the branch (3) conduit is ready in the vicinity of the respective connection point, bending the branch conduit in the direction of the connection point, arranging, positioning and bending one or more of the other conduit assemblies in the same manner in the extension of the main conduit of the first conduit assembly, wherein the conduit assemblies are connected one to the other by means of straight couplings.

## Patentansprüche

1. Leitungsanordnung (1) zur Verbindung mit Verbindungspunkten, die sich an verteilten Stellen befinden, von mehreren Gebäuden oder Teilen eines Gebäudes zur Beförderung eines flüssigen Mediums von den Verbindungspunkten weg oder zu ihnen hin, umfassend eine biegbare Hauptleitung (2), mehrere Verzweigungsgehäuse (4), die über die Länge der Hauptleitung verteilt sind, und biegbare Verzweigungsleitungen (3), die sich von den Verzweigungsgehäusen fortsetzen, wobei die Hauptleitung und die Verzweigungsleitungen mit einem Medienrohr (11a, 11b), einer flexiblen wärmeisolierenden Hülle (12) um das Medienrohr und einer abdichtenden Außenschicht (13) um die wärmeisolierende Hülle (12) versehen sind, wobei die Medienrohre (11b) der Verzweigungsleitungen innerhalb der Verzweigungsgehäuse zum Medienrohr der Hauptleitung verbinden und die abdichtenden Außenschichten (13) mit dem Verzweigungsgehäuse (4) verbunden oder vereinigt sind, wobei die Hauptleitung mit den längsseitigen Verzweigungsleitungen innerhalb des biegbaren Bereichs in mehreren Windungen zum Ausbilden einer Rolle gebogen ist.

2. Leitungsanordnung gemäß Anspruch 1, wobei die Verzweigungsleitung (3) an der Stelle der Verbindung zum Verzweigungsgehäuse (4) im Wesentlichen parallel zur Hauptleitung (2) verläuft.

3. Leitungsanordnung gemäß einem der vorhergehenden Ansprüche, wobei die Anzahl von Verzweigungsleitungen (3) zumindest drei ist.

4. Leitungsanordnung gemäß einem der vorhergehenden Ansprüche, wobei die Abstände zwischen den Verzweigungsleitungen dieselben sind.

5. Leitungsanordnung gemäß einem der vorhergehenden Ansprüche, wobei die Abstände zwischen den Verzweigungsleitungen (3) im Wesentlichen den Abständen zwischen den Verbindungspunkten entsprechen.

6. Leitungsanordnung gemäß einem der vorhergehenden Ansprüche, wobei der Außendurchmesser der Verzweigungsleitung (3) kleiner als der Außendurchmesser der Hauptleitung (2) ist.

7. Leitungsanordnung gemäß einem der vorhergehenden Ansprüche, wobei die Außenenden der Verzweigungsleitungen (3), die der Mittellinie der Hauptleitung folgen, alle zum selben Außenende der Hauptleitung hin ausgerichtet sind.

8. Leitungsanordnung gemäß einem der vorhergehenden Ansprüche, wobei die Leitungen (2, 3) und/oder die Außenschicht (13) und/oder das Verzweigungsgehäuse (4) aus synthetischem Material, vorzugsweise thermoplastischem synthetischem Material, hergestellt sind.

9. Leitungsanordnung gemäß einem der vorhergehenden Ansprüche, wobei die Hülle (12) aus Schaum, vorzugsweise Polyolefinschaum oder Polyurethanschaum, hergestellt ist.

10. Leitungsanordnung gemäß einem der vorhergehenden Ansprüche, wobei die Außenschicht (13) quer verlaufende Riffelungen umfasst.

11. Verfahren zum Anordnen einer Leitungsanordnung (1), die als Rolle geliefert ist, zur Verbindung von Leitungen (2, 3) mit Verbindungspunkten (71), die sich an verteilten Stellen befinden, von mehreren Gebäuden oder Teilen eines Gebäudes zur Beförderung eines flüssigen Mediums von den Verbindungspunkten weg oder zu ihnen hin, wobei die Leitungsanordnung eine biegbare Hauptleitung (2), mehrere Verzweigungsgehäuse (4), die über die Länge der Hauptleitung verteilt sind, und biegbare Verzweigungsleitungen (3) umfasst, die sich von den Verzweigungsgehäusen fortsetzen, wobei die Hauptleitung und die Verzweigungsleitungen mit einem Medienrohr (11a, 11b), einer flexiblen wärmeisolierenden Hülle (12) um das Medienrohr und einer abdichtenden Außenschicht (13) um die wärmeisolierende Hülle (12) versehen sind, wobei die Medienrohre (11b) der Verzweigungsleitungen innerhalb der Verzweigungsgehäuse (4) zum Medienrohr der Hauptleitung verbinden und die abdichtenden Außenschichten (13) mit dem Verzweigungsgehäuse (4) verbunden oder vereinigt sind, wobei die Hauptleitung mit den längsseitigen Verzweigungsleitungen innerhalb des biegbaren Bereichs in mehreren Windungen zum Ausbilden einer Rolle gebogen ist, wobei das Verfahren das Zuführen der Leitungsanordnung auf einer Rolle zu einem Einrichtungsort, das Abwickeln einer Länge der Leitungsanordnung (1), das Anordnen der Leitungsanordnung mit der Hauptleitung in einer Aussparung oder einem Raum, die bzw. der für diesen Zweck vorgesehen ist, das derartige Positionieren der Leitungsanordnung bezüglich der Verbindungspunkte (71), dass die Verzweigungsleitungen in der Nähe ihrer jeweiligen Verbindungspunkten bereit sind, das Biegen von einer oder mehr Verzweigungsleitungen (3) in die Richtung der Verbindungspunkte umfasst.

12. Verfahren zum Anordnen einer Leitungsanordnung (1), die als Rolle geliefert ist, zur Verbindung einer Leitung mit einem Verbindungspunkt (71) eines Gebäudes zur Beförderung eines flüssigen Mediums von dem Verbindungspunkt (71) weg oder zu ihm hin, wobei die Leitungsanordnung (1) eine biegbare Hauptleitung (2), ein Verzweigungsgehäuse (4) und eine biegbare Verzweigungsleitung (3) umfasst, die sich vom Verzweigungsgehäuse (4) erstrecken, wobei die Hauptleitung (2) und die Verzweigungsleitung (3) mit einem Medienrohr (11a, 11b), einer flexiblen wärmeisolierenden Hülle (12) um das Medienrohr und einer abdichtenden Außenschicht (13) um die wärmeisolierende Hülle versehen sind, wobei das Medienrohr (11b) der Verzweigungsleitung innerhalb des Verzweigungsgehäuses zum Medienrohr (11a) der Hauptleitung verbindet und die abdichtenden Außenschichten (13) mit dem Verzweigungsgehäuse (4) verbunden oder vereinigt sind, wobei das Verfahren das Zuführen einer Anzahl von Leitungsanordnungen zu einem Einrichtungsort, das Anordnen der ersten Leitungsanordnung mit der Hauptleitung in einer Aussparung oder einem Raum, die bzw. der für diesen Zweck vorgesehen ist, das derartige Positionieren der ersten Leitungsanordnung bezüglich des jeweiligen Verbindungspunkts (71), dass die Verzweigungsleitung (3) in der Nähe des jeweiligen Verbindungspunkts bereit ist, das Biegen der Verzweigungsleitung in die Richtung des Verbindungspunkts, das Anordnen, Positionieren und Biegen von einer oder mehr der anderen Leitungsanordnungen auf dieselbe Art und Weise in Verlängerung der Hauptleitung der ersten Leitungsanordnung umfasst, wobei die Leitungsanordnungen mithilfe von geraden Kopplern miteinander verbunden werden.

## Revendications

1. Ensemble de conduite (1) pour le raccordement à des points de raccordement qui sont situés sur des emplacements éparpillés, de plusieurs bâtiments ou parties d'un bâtiment pour transporter un milieu liquide de ou vers lesdits points de raccordement, comprenant une conduite principale cintrable (2), plusieurs boîtiers de dérivation (4) éparpillés sur la longueur de la conduite principale et des conduites de dérivation flexibles (3) s'étendant à partir des boîtiers de dérivation, dans lequel la conduite principale et les conduites de dérivation sont dotées d'un tuyau de milieu (11a, 11 b), d'une gaine thermo-isolante souple (12) autour du tuyau de milieu et d'une couche externe d'étanchéité (13) autour de la gaine thermo-isolante (12), dans lequel les tuyaux de milieu (11 b) des conduites de dérivation à l'intérieur des boîtiers de dérivation se raccordent au tuyau de milieu de la conduite principale et les couches externes d'étanchéité (13) sont raccordées à ou assemblées au boîtier de dérivation (4), dans lequel la conduite principale avec les conduites de dérivation le long de cette dernière, est fléchie dans les limites de la plage de flexion sur plusieurs enroulements afin de former un rouleau.

2. Ensemble de conduite selon la revendication 1, dans lequel, à l'emplacement du raccordement au boîtier de dérivation (4), la conduite de dérivation (3) s'étend sensiblement parallèlement à la conduite principale (2).

3. Ensemble de conduite selon l'une quelconque des revendications précédentes, dans lequel le nombre de conduites de dérivation (3) est au moins de trois.

4. Ensemble de conduite selon l'une quelconque des revendications précédentes, dans lequel les distances entre les conduites de dérivation (3) sont les mêmes.

5. Ensemble de conduite selon l'une quelconque des revendications précédentes, dans lequel les distances entre les conduites de dérivation (3) correspondent sensiblement aux distances entre les points de raccordement.

6. Ensemble de conduite selon l'une quelconque des revendications précédentes, dans lequel le diamètre externe de la conduite de dérivation (3) est plus petit que le diamètre externe de la conduite principale (2).

7. Ensemble de conduite selon l'une quelconque des revendications précédentes, dans lequel les extrémités externes des conduits de dérivation (3) suivant l'axe central de la conduite principale sont toutes orientées vers la même extrémité externe de la conduite principale.

8. Ensemble de conduite selon l'une quelconque des revendications précédentes, dans lequel les conduites (2, 3) et/ou la couche externe (13) et/ou le boîtier de dérivation (4) sont réalisés avec un matériau synthétique, de préférence un matériau synthétique thermoplastique.

9. Ensemble de conduite selon l'une quelconque des revendications précédentes, dans lequel la gaine (12) est réalisée à partir de mousse, de préférence de la mousse de polyoléfine ou de la mousse de polyuréthane.

10. Ensemble de conduite selon l'une quelconque des revendications précédentes, dans lequel la couche externe (13) comprend des ondulations transversales.

11. Procédé pour agencer un ensemble de conduite (1), fourni sous la forme d'un rouleau, pour raccorder des conduites (23) à des points de raccordement (71) qui sont situés à des emplacements éparpillés, de plusieurs bâtiments ou parties d'un bâtiment pour transporter un milieu liquide de ou vers lesdits points de raccordement, dans lequel l'ensemble de conduite comprend une conduite principale flexible (2), plusieurs boîtiers de dérivation (4) éparpillés sur la longueur de la conduite principale et des conduites de dérivation flexibles (3) s'étendant à partir des boîtiers de dérivation, dans lequel la conduite principale et les conduites de dérivation sont dotées d'un tuyau de milieu (11a, 11 b), d'une gaine thermo-isolante souple (12) autour du tuyau de milieu et une couche externe d'étanchéité (13) autour de la gaine thermo-isolante (12), dans lequel les tuyaux de milieu (11b) des conduites de dérivation à l'intérieur des boîtiers de dérivation (4) se raccordent au tuyau de milieu de la conduite principale et les couches externes d'étanchéité sont raccordées à ou assemblées au boîtier de dérivation (4), dans lequel la conduite principale avec les conduites de dérivation le long de cette dernière est fléchie dans les limites de la plage de flexion sur plusieurs enroulements afin de former un rouleau, le procédé comprenant les étapes consistant à fournir l'ensemble de conduite sur un rouleau à un emplacement d'installation, dérouler une longueur de l'ensemble de conduite (1), agencer l'ensemble de conduite avec la conduite principale dans un enfoncement ou espace prévu à cet effet, positionner l'ensemble de conduite par rapport aux points de raccordement (71) de sorte que les conduites de dérivation sont prêtes à proximité de leurs points de raccordement respectifs, courber une ou plusieurs conduites de dérivation (3) dans la direction des points de raccordement.

12. Procédé pour agencer un ensemble de conduite (1) fourni sous forme de rouleau, pour raccorder une conduite à un point de raccordement (71) d'un bâtiment pour transporter un milieu liquide de ou vers le point de raccordement (71), dans lequel l'ensemble de conduite (1) comprend une conduite principale flexible (2), un boîtier de dérivation (4) et une conduite de dérivation flexible (3) s'étendant à partir du boîtier de dérivation (4), dans lequel la conduite principale (2) et la conduite de dérivation (3) sont dotées d'un tuyau de milieu (11a, 11 b), d'une gaine thermo-isolante souple (12) autour du tuyau de milieu et d'une couche externe d'étanchéité (13) autour de la gaine thermo-isolante, dans lequel le tuyau de milieu (11 b) de la conduite de dérivation à l'intérieur du boîtier de dérivation se raccorde au tuyau de milieu (11a) de la conduite principale et les couches externes d'étanchéité (13) sont raccordées à ou assemblées au boîtier de dérivation (4), dans lequel le procédé comprend les étapes consistant à fournir un certain nombre d'ensembles de conduite à un emplacement d'installation, agencer le premier ensemble de conduite avec la conduite principale dans un enfoncement ou espace prévu à cet effet, positionner le premier ensemble de conduite par rapport au point de raccordement (71) respectif, de sorte que la conduite de dérivation (3) est prête à proximité du point de raccordement respectif, courber la conduite de dérivation dans la direction du point de raccordement, agencer, positionner et courber un ou plusieurs des autres ensembles de conduite de la même manière dans le prolongement de la conduite principale du premier ensemble de conduite, dans lequel les ensembles de conduite sont raccordés entre eux au moyen de couplages droits.
